# EUROPÄISCHE PATENTSCHRIFT

(11) **EP 4 077 491 B1**
(45) Veröffentlichungstag und Bekanntmachung des Hinweises auf die Patenterteilung: **14.06.2023**
(21) Anmeldenummer: 19824303.2
(22) Anmeldetag: 17.12.2019
(51) Int. Cl.: C08J 3/12, C08G 77/12, C08G 77/20, C08K 3/36

(54) **SILICONPARTIKEL MIT EINEM VERNETZTEN KERN UND DEREN HERSTELLUNG**
SILICONE PARTICLES WITH A CROSS-LINKED CORE AND PREPARATION THEREOF
PARTICULES DE SILICONE À NOYAU RÉTICULÉ ET PRÉPARATION CORRESPONDANTE

(43) Veröffentlichungstag der Anmeldung: 26.10.2022
(73) Patentinhaber: Wacker Chemie AG, 81737 München (DE)
(72) Erfinder: KNÖR, Sebastian, 84547 Emmerting (DE)
(74) Vertreter: Fritz, Helmut
(86) Internationale Anmeldenummer: PCT/EP2019/085649
(87) Internationale Veröffentlichungsnummer: WO 2021/121561

(56) Entgegenhaltungen:
- US-A- 5 492 945
- US-A- 5 691 401
- US-A- 5 948 469
- US-A1- 2019 038 520

## Beschreibung

Die Erfindung betrifft elastomere Partikel P, aufgebaut aus einem Kern enthaltend vernetzte Siliconelastomerzusammensetzung und verstärkenden Füllstoff, sowie ein Verfahren zu deren Herstellung.

WO2017142068 A1 beschreibt die vorteilhaften Eigenschaften der Silica-beschichteten Siliconelastomerpartikel, insbesondere sphärische Eigenschaften, Beeinflussbarkeit der hydrophoben Eigenschaften, reibungsvermindernde Eigenschaften, kein Blocken. Derartige Silica-beschichtete Siliconelastomerpartikel finden deshalb kosmetische Anwendungen.

Solche Partikel haben auch den Vorteil, dass sie funktionelle Stoffe, wie Pflegeöle oder Duftstoffe absorbieren können. Dies ist ein wesentlicher Vorteil gegenüber den in WO2007113095 offenbarten, Harz-basierten Partikeln. Diese Partikel nach WO2017142068 weisen jedoch ein noch nicht ideales Hautgefühl und eine geringe mechanische Stabilität auf. Durch Druck und Reibung werden solche Elastomerpartikel leicht zerstört.

Gegenstand der Erfindung sind Partikel P aufgebaut aus einem Kern K enthaltend vernetzte Siliconelastomerzusammensetzung X und verstärkenden Füllstoff F und einer Hülle H aus Silica S.

Die Partikel P weisen unter Anwendungsbedingungen gegenüber den bekannten Partikeln, welche im Kern keinen verstärkenden Füllstoff aufweisen, ein überraschend verbessertes Hautgefühl auf. Dies ist insbesondere deswegen überraschend, weil der verstärkende Füllstoff im Kern K der Silica-beschichteten Siliconelastomerpartikel enthalten ist und die äußere Hülle H des Partikels P, die das unmittelbare Hautgefühl bewirkt, nicht verändert.

Vollkommend unvorhersehbar weisen die erfindungsgemäßen Partikel P gegenüber bekannten Partikeln, welche im Kern keinen verstärkenden Füllstoff oder einen nicht-verstärkenden Füllstoff aufweisen, auch eine verbesserte mechanische Stabilität auf, obwohl die äußere Hülle H des Partikels P unverändert ist.

Die Partikel P sind im Wesentlichen sphärisch. Vorzugsweise ist die Sphärizität SPHT3 mindestens 0,8, bevorzugt mindestens 0,82, bestimmbar gemäß ISO 9276-6 mit einem Camsizer X2 von Retsch Technology.

Die Partikel P sind insbesondere dadurch gekennzeichnet, dass die eingesetzte Silica S im wesentlich an der Oberfläche der Polymer-Partikel P gebunden ist. Die Verteilung der eingesetzten Silica S lässt sich aus TEM-Aufnahmen von Dünnschliffen von eingebetteten erfindungsgemäßen Partikeln erhalten. Silica S taucht vorzugsweise mehr als 10 nm, bevorzugt mehr als 20 nm, besonders bevorzugt mehr als 30 nm in das vernetzte Polymerisationsprodukt ein und ragt vorzugsweise mehr als 10 nm, bevorzugt mehr als 20 nm, besonders bevorzugt mehr als 30 nm aus dem vernetzten Polymerisationsprodukt heraus, jeweils gemessen von der äußeren Grenze des vernetzten Polymerisationsprodukts, und ist dadurch an der Oberfläche des Partikels P fest gebunden. Dies ist ein wesentlicher Vorteil gegenüber einem kommerziell erhältlichen Produkt, bei dem der fertige Siliconelastomer Partikel mit einer Kieselsäure nachbehandelt wird. Bei diesem Produkt taucht die Kieselsäure nicht in das Siliconelastomer ein und ist dadurch nicht fest an der Oberfläche gebunden.

Als Siliconelastomerzusammensetzung X können im Prinzip alle dem Stand der Technik bekannten Silicone verwendet werden. Es können additionsvernetzende, peroxidisch vernetzende, kondensationsvernetzende oder strahlenvernetzende Zusammensetzungen verwendet werden. Bevorzugt sind peroxidisch oder additionsvernetzende Zusammensetzungen. Besonders bevorzugt sind additionsvernetzende Zusammensetzungen.

Erfindungsgemäß verwendete additionsvernetzende Siliconelastomerzusammensetzungen X sind im Stand der Technik bekannt und enthalten im einfachsten Fall
(A) mindestens eine lineare Verbindung, die Reste mit aliphatischen Kohlenstoff-Kohlenstoff-Mehrfachbindungen aufweist,
(B) mindestens eine lineare Organopolysiloxanverbindung mit Si-gebundenen Wasserstoffatomen,
   oder anstelle von (A) und (B)
(C) mindestens eine lineare Organopolysiloxanverbindung, die SiC-gebundene Reste mit aliphatischen Kohlenstoff-Kohlenstoff Mehrfachbindungen und Si-gebundene Wasserstoffatome aufweist, und
(D) mindestens einen Hydrosilylierungskatalysator.

Bei den additionsvernetzenden Siliconelastomerzusammensetzungen X kann es sich um Einkomponenten-Siliconzusammensetzungen wie auch um Zweikomponenten-Siliconzusammensetzungen handeln.

Bei Zweikomponenten-Siliconelastomerzusammensetzungen X können die beiden Komponenten der additionsvernetzenden Siliconelastomerzusammensetzungen X alle Bestandteile in beliebiger Kombination enthalten, im Allgemeinen mit der Maßgabe, dass eine Komponente nicht gleichzeitig Siloxane mit aliphatischer Mehrfachbindung, Siloxane mit Si-gebundenem Wasserstoff und Katalysator, also im Wesentlichen nicht gleichzeitig die Bestandteile (A), (B) und (D) bzw. (C) und (D) enthält.

Die in den additionsvernetzenden Siliconelastomerzusammensetzungen X eingesetzten Verbindungen (A) und (B) bzw. (C) werden bekanntermaßen so gewählt, dass eine Vernetzung möglich ist. So weist beispielsweise Verbindung (A) mindestens zwei aliphatisch ungesättigte Reste auf und (B) mindestens drei Si-gebundene Wasserstoffatome, oder Verbindung (A) weist mindestens drei aliphatisch ungesättigte Reste auf und Siloxan (B) mindestens zwei Si-gebundene Wasserstoffatome, oder aber anstelle von Verbindung (A) und (B) wird Siloxan (C) eingesetzt, welches aliphatisch ungesättigte Reste und Si-gebundene Wasserstoffatome in den oben genannten Verhältnissen aufweist. Auch geeignet sind Mischungen aus (A) und (B) und (C) mit den oben genannten Verhältnissen von aliphatisch ungesättigten Resten und Si-gebundenen Wasserstoffatomen. Die additionsvernetzende Siliconelastomerzusammensetzung X enthält üblicherweise 30-99,9 Gew.%, bevorzugt 35-95 Gew.% und besonders bevorzugt 40-90 Gew.% (A). Die additionsvernetzende Siliconelastomerzusammensetzung X enthält üblicherweise 0,1-60 Gew.%, bevorzugt 0,5-50 Gew.% und besonders bevorzugt 1-30 Gew.% (B). Falls die additionsvernetzende Siliconelastomerzusammensetzung X die Komponente (C) enthält, sind üblicherweise 30-95 Gew.%, bevorzugt 35-90 Gew.%, besonders bevorzugt 40-85 Gew.% (C) in der Formulierung enthalten.

Bei der erfindungsgemäß eingesetzten Verbindung (A) kann es sich um siliciumfreie organische Verbindungen mit vorzugsweise mindestens zwei aliphatisch ungesättigten Gruppen sowie um Organosiliciumverbindungen mit vorzugsweise mindestens zwei aliphatisch ungesättigten Gruppen handeln oder auch um deren Mischungen.

Beispiele für siliciumfreie organische Verbindungen (A) sind, 1,3,5-Trivinylcyclohexan, 2,3-Dimethyl-1,3-butadien, 7-Methyl-3-methylen-1,6-octadien, 2-Methyl-1,3-butadien, 1,5-Hexadien, 1,7-Octadien, 4,7-Methylen-4,7,8,9-tetrahydroinden, Methylcyclopentadien, 5-Vinyl-2-norbornen, Bicyclo[2.2.1]hepta-2,5-dien, 1,3-Diisopropenylbenzol, vinylgruppenhaltiges Polybutadien, 1,4-Divinylcyclohexan, 1,3,5-Triallylbenzol, 1,3,5-Trivinylbenzol, 1,2,4-Trivinylcyclohexan, 1,3,5-Triisopropenylbenzol, 1,4-Divinylbenzol, 3-Methyl-heptadien-(1,5), 3-Phenyl-hexadien-(1,5), 3-Vinyl-hexadien-(1,5 und 4,5-Dimethyl-4,5-diethyl-octadien-(1,7), N,N'-Methylen-bis-acrylsäureamid, 1,1,1-Tris(hydroxymethyl)-propan-triacrylat, 1,1,1-Tris(hydroxymethyl)propantrimethacrylat, Tripropylenglykol-diacrylat, Diallylether, Diallylamin, Diallylcarbonat, N,N'-Diallylharnstoff, Triallylamin, Tris(2-methylallyl)amin, 2,4,6-Triallyloxy-1,3,5-triazin, Triallyl-s-triazin-2,4,6(1H,3H,5H)-trion, Malonsäurediallylester, Polyethylenglykoldiacrylat, Polyethylenglykol Dimethacrylat, Poly(propylenglykol)methacrylat.

Vorzugsweise enthalten die additionsvernetzende Siliconelastomerzusammensetzungen X als Bestandteil (A) mindestens eine aliphatisch ungesättigte Organosiliciumverbindung, wobei alle bisher in additionsvernetzenden Zusammensetzungen verwendeten, aliphatisch ungesättigten Organosiliciumverbindungen eingesetzt werden können, wie beispielsweise Silicon-Blockcopolymere mit Harnstoffsegmenten, Silicon-Blockcopolymere mit Amid-Segmenten und/oder Imid-Segmenten und/oder Ester-Amid-Segmenten und/oder Polystyrol-Segmenten und/oder Silarylen-Segmenten und/oder Carboran-Segmenten und Silicon-Pfropfcopolymere mit EtherGruppen.

Als Organosiliciumverbindungen (A), die SiC-gebundene Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel (I)

R4ₐR⁵_{b}SiO_{(4-a-b)/2} (I)

eingesetzt, wobei
   **R⁴** unabhängig voneinander, gleich oder verschieden, ein von aliphatischen Kohlenstoff-Kohlenstoff-Mehrfachbindungen freien, organischen oder anorganischen Rest,
   **R⁵** unabhängig voneinander, gleich oder verschieden einen einwertigen, substituierten oder nicht substituierten, SiC-gebundenen Kohlenwasserstoffrest mit mindestens einer aliphatischen Kohlenstoff-Kohlenstoff-Mehrfachbindung,
   **a** 0, 1, 2 oder 3 ist, und
   **b** 0, 1 oder 2 ist
   bedeuten,
mit der Maßgabe, dass die Summe a + b kleiner oder gleich 3 ist und mindestens 2 Reste R⁵ je Molekül vorliegen.

Bei Rest R⁴ kann es sich um ein- oder mehrwertige Reste handeln, wobei die mehrwertigen Reste, wie beispielsweise bivalente, trivalente und tetravalente Reste, dann mehrere, wie etwa zwei, drei oder vier, Siloxy-Einheiten der Formel (I) miteinander verbinden.

Weitere Beispiele für R⁴ sind die einwertigen Reste -F, -Cl, - Br, OR⁶, -CN, -SCN, -NCO und SiC-gebundene, substituierte oder nicht substituierte Kohlenwasserstoffreste, die mit Sauerstoffatomen oder der Gruppe -C(O)- unterbrochen sein können, sowie zweiwertige, beidseitig gemäß Formel (I) Si-gebundene Reste. Falls es sich bei Rest R⁴ um SiC-gebundene, substituierte Kohlenwasserstoffreste handelt, sind bevorzugte Substituenten Halogenatome, phosphorhaltige Reste, Cyanoreste, -OR⁶, -NR⁶-, -NR⁶₂, -NR⁶-C(O)-NR⁶₂, -C(O)-NR⁶₂, -C(O)R⁶, -C(O)OR⁶, -SO₂-Ph und -C₆F₅. Dabei bedeuten R⁶ unabhängig voneinander, gleich oder verschieden ein Wasserstoffatom oder einen einwertigen Kohlenwasserstoffrest mit 1 bis 20 Kohlenstoffatomen und Ph gleich dem Phenylrest.

Beispiele für Reste R⁴ sind Alkylreste, wie der Methyl-, Ethyl-, n-Propyl-, iso-Propyl-, n-Butyl-, iso-Butyl-, tert-Butyl-, n-Pentyl-, iso-Pentyl-, neo-Pentyl-, tert-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest, Cycloalkylreste, wie Cyclopentyl-, Cyclohexyl-, Cycloheptyl- und Methylcyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest.

Beispiele für substituierte Reste R⁴ sind Halogenalkylreste, wie der 3,3,3-Trifluor-n-propylrest, der 2,2,2,2',2',2'-Hexafluorisopropylrest, der Heptafluorisopropylrest, Halogenarylreste, wie der o-, m- und p-Chlorphenylrest, -(CH₂)-N(R⁶)C(O)NR⁶₂, -(CH₂)ₒ-C(O)NR⁶₂, -(CH₂)ₒ-C(O)R⁶, -(CH₂)ₒ-C(O)OR⁶, - (CH₂)ₒ-C(O)NR⁶₂, -(CH2)-C(O)-(CH₂)ₚC(O)CH3, -(CH₂)-O-CO-R⁶, -(CH₂)-NR⁶-(CH₂)ₚ-NR⁶₂, - (CH₂)ₒ-O-(CH₂)ₚCH(OH)CH₂OH, - (CH₂)ₒ(OCH₂CH₂)ₚOR⁶, - (CH₂)ₒ-SO₂-Ph und - (CH₂)ₒ-O-C₆F₅, wobei R⁶ und Ph der oben dafür angegebene Bedeutung entsprechen und o und p gleiche oder verschiedene ganze Zahlen zwischen 0 und 10 bedeuten.

Beispiele für R⁴ gleich zweiwertige, beidseitig gemäß Formel (I) Si-gebundene Reste sind solche, die sich von den voranstehend für Rest R⁴ genannten einwertigen Beispiele dadurch ableiten, dass eine zusätzliche Bindung durch Substitution eines Wasserstoffatoms erfolgt, Beispiele für derartige Reste sind -(CH₂)-, -CH(CH₃)-, -C(CH₃)₂-, -CH(CH₃)-CH₂-, -C₆H₄-, -CH(Ph)-CH₂-, -C(CF₃)₂-, -(CH₂)ₒ-C₆H₄-(CH₂)ₒ-, - (CH₂)ₒ-C₆H₄-C₆H₄-(CH₂)ₒ-, - (CH₂O)ₚ, (CH₂CH₂O)ₒ, - (CH₂)ₒ-Oₓ-C₆H₄-SO₂-C₆H₄-Oₓ-(CH₂)ₒ-, wobei x 0 oder 1 ist, und Ph, o und p die voranstehend genannte Bedeutung haben.

Bevorzugt handelt es sich bei Rest R⁴ um einen einwertigen, von aliphatischen Kohlenstoff-Kohlenstoff-Mehrfachbindungen freien, SiC-gebundenen, gegebenenfalls substituierten Kohlenwasserstoffrest mit 1 bis 18 Kohlenstoffatomen, besonders bevorzugt um einen einwertigen, von aliphatischen Kohlenstoff-Kohlenstoff-Mehrfachbindungen freien, SiC-gebundenen Kohlenwasserstoffrest mit 1 bis 6 Kohlenstoffatomen, insbesondere um den Methyl- oder Phenylrest.

Bei Rest R⁵ kann es sich um beliebige, einer Anlagerungsreaktion (Hydrosilylierung) mit einer SiHfunktionellen Verbindung zugängliche Gruppen handeln.

Falls es sich bei Rest R⁵ um SiC-gebundene, substituierte Kohlenwasserstoffreste handelt, sind als Substituenten Halogenatome, Cyanoreste und -OR⁶ bevorzugt, wobei R⁶ die obengenannte Bedeutung hat.

Bevorzugt handelt es sich bei Rest R⁵ um Alkenyl- und Alkinylgruppen mit 2 bis 16 Kohlenstoffatomen, wie Vinyl-, Allyl-, Methallyl-, 1-Propenyl-, 5-Hexenyl-, Ethinyl-, Butadienyl-, Hexadienyl-, Cyclopentenyl-, Cyclopentadienyl-, Cyclohexenyl-, Vinylcyclohexylethyl-, Divinylcyclohexylethyl-, Norbornenyl-, Vinylphenyl- und Styrylreste, wobei Vinyl-, Allyl- und Hexenylreste besonders bevorzugt verwendet werden.

Das Molekulargewicht des Bestandteils (A) kann in weiten Grenzen variieren, etwa zwischen 10² und 10⁶ g/mol. So kann es sich bei dem Bestandteil (A) beispielsweise um ein relativ niedermolekulares alkenylfunktionelles Oligosiloxan, wie 1,2-Divinyltetramethyldisiloxan, handeln, jedoch auch um ein über kettenständige oder endständige Si-gebundene Vinylgruppen verfügendes hochpolymeres Polydimethylsiloxan, z.B. mit einem Molekulargewicht von 10⁵ g/mol (mittels NMR bestimmtes Zahlenmittel). Auch die Struktur der den Bestandteil (A) bildenden Moleküle ist nicht festgelegt; insbesondere kann die Struktur eines höhermolekularen, also oligomeren oder polymeren Siloxans linear, cyclisch, verzweigt oder auch harzartig, netzwerkartig sein. Lineare und cyclische Polysiloxane sind vorzugsweise aus Einheiten der Formel R⁴₃SiO_{1/2}, R⁵R⁴₂SiO_{1/2}, R⁵R⁴SiO_{1/2} und R⁴₂SiO_{2/2} zusammengesetzt, wobei R⁴ und R⁵ die vorstehend angegebene Bedeutung haben. Verzweigte und netzwerkartige Polysiloxane enthalten zusätzlich trifunktionelle und/oder tetrafunktionelle Einheiten, wobei solche der Formeln R⁴SiO_{3/2}, R⁵SiO_{3/2} und SiO_{4/2} bevorzugt sind. Selbstverständlich können auch Mischungen unterschiedlicher, den Kriterien des Bestandteils (A) genügender Siloxane eingesetzt werden.

Besonders bevorzugt als Komponente (A) ist die Verwendung vinylfunktioneller, im wesentlichen linearer Polydiorganosiloxane mit einer kinematischen Viskosität von 0,01 bis 500 000 mm²/s, besonders bevorzugt von 0,1 bis 100 000 mm²/s, insbesondere bevorzugt von 1 bis 10000 mm²/s jeweils gemessen nach DIN 53019 bei 25°C.

Als Organosiliciumverbindung (B) können alle hydrogenfunktionellen Organosiliciumverbindungen eingesetzt werden, die auch bisher in additionsvernetzbaren Zusammensetzungen eingesetzt worden sind.

Als Organopolysiloxane (B), die Si-gebundene Wasserstoffatome aufweisen, werden vorzugsweise lineare, cyclische oder verzweigte Organopolysiloxane aus Einheiten der allgemeinen Formel (III)

R⁴_{c}H_{d}SiO_{(4-c-d)/2} (III)

eingesetzt, wobei
   **R⁴** die oben angegebene Bedeutung hat,
   **c** 0, 1, 2 oder 3 ist und
   **d** 0, 1 oder 2 ist,
mit der Maßgabe, dass die Summe von c + d kleiner oder gleich 3 ist und mindestens zwei Si-gebundene Wasserstoffatome je Molekül vorliegen.

Vorzugsweise enthält das erfindungsgemäß eingesetzte Organopolysiloxan (B) Si-gebundenen Wasserstoff im Bereich von 0,04 bis 1,7 Gewichtsprozent (Gew.%), bezogen auf das Gesamtgewicht des Organopolysiloxans (B).

Das Molekulargewicht des Bestandteils (B) kann ebenfalls in weiten Grenzen variieren, etwa zwischen 10² und 10⁶ g/mol. So kann es sich bei dem Bestandteil (B) beispielsweise um ein relativ niedermolekulares SiH-funktionelles Oligosiloxan, wie Tetramethyldisiloxan, handeln, jedoch auch um ein über kettenständig oder endständig SiH-Gruppen verfügendes hochpolymeres Polydimethylsiloxan oder ein SiH-Gruppen aufweisendes Siliconharz.

Auch die Struktur der den Bestandteil (B) bildenden Moleküle ist nicht festgelegt; insbesondere kann die Struktur eines höhermolekularen, also oligomeren oder polymeren SiH-haltigen Siloxans linear, cyclisch, verzweigt oder auch harzartig, netzwerkartig sein. Lineare und cyclische Polysiloxane (B) sind vorzugsweise aus Einheiten der Formel R⁴₃SiO_{1/2}, HR⁴₂SiO_{1/2}, HR⁴SiO_{2/2} und R⁴₂SiO_{2/2} zusammengesetzt, wobei R⁴ die vorstehend angegebene Bedeutung hat. Verzweigte und netzwerkartige Polysiloxane enthalten zusätzlich trifunktionelle und/oder tetrafunktionelle Einheiten, wobei solche der Formeln R⁴SiO_{3/2}, HSiO_{3/2} und SiO_{4/2} bevorzugt sind, wobei R⁴ die vorstehend angegebene Bedeutung hat.

Selbstverständlich können auch Mischungen unterschiedlicher, den Kriterien des Bestandteils (B) genügender Siloxane eingesetzt werden. Besonders bevorzugt ist die Verwendung niedermolekularer SiH-funktioneller Verbindungen wie Tetrakis(dimethylsiloxy)silan und Tetramethylcyclotetrasiloxan, sowie höhermolekularer, SiH-haltiger Siloxane, wie Poly(hydrogenmethyl)siloxan und Poly(dimethylhydrogenmethyl)siloxan mit einer kinematischen Viskosität nach DIN 53019 bei 25°C von 1 bis 20 000 mm²/s, bevorzugt von 10 bis 1000 mm²/s, oder analoge SiH-haltige Verbindungen, bei denen ein Teil der Methylgruppen durch 3,3,3-Trifluorpropyl- oder Phenylgruppen ersetzt ist.

Bestandteil (B) ist vorzugsweise in einer solchen Menge in den vernetzbaren Siliconelastomerzusammensetzungen X enthalten, dass das Molverhältnis von SiH-Gruppen zu aliphatisch ungesättigten Gruppen aus (A) bei 0,1 bis 20, besonders bevorzugt zwischen 0,3 und 5,0 und insbesondere bevorzugt zwischen 0,6 und 2liegt.

Die erfindungsgemäß eingesetzten Komponenten (A) und (B) sind handelsübliche Produkte bzw. nach in der Chemie gängigen Verfahren herstellbar.

Anstelle von Komponente (A) und (B) können die Siliconelastomerzusammensetzungen Organopolysiloxane (C), die gleichzeitig aliphatische Kohlenstoff-Kohlenstoff-Mehrfachbindungen und Si-gebundene Wasserstoffatome aufweisen, enthalten. Auch können die Siliconelastomerzusammensetzungen X alle drei Komponenten (A), (B) und (C) enthalten.

Falls Siloxane (C) eingesetzt werden, handelt es sich vorzugsweise um solche aus Einheiten der allgemeinen Formeln (IV), (V) und (VI)

R⁴_{f}SiO_{4/2} (IV)

R⁴_{g}R⁵SiO_{3-g/2} (V)

R⁴ₕHSiO_{3-h/2} (VI)

wobei
- **R⁴** und **R⁵**: die oben dafür angegebene Bedeutung haben
- **f**: 0, 1, 2 oder 3 ist,
- **g**: 0, 1 oder 2 ist und
- **h**: 0, 1 oder 2 ist,
mit der Maßgabe, dass je Molekül mindestens 2 Reste R⁵ und mindestens 2 Si-gebundene Wasserstoffatome vorliegen.

Beispiele für Organopolysiloxane (C) sind solche aus SiO_{4/2}, R⁴₃SiO_{1/2}-, R⁴₂R⁵SiO_{1/2}- und R⁴₂HSiO_{1/2}- Einheiten, sogenannte MP-Harze, wobei diese Harze zusätzlich R⁴SiO_{3/2}- und R⁴₂SiO-Einheiten enthalten können, sowie lineare Organopolysiloxane im Wesentlichen bestehend aus R⁴₂R⁵SiO_{1/2}-, R⁴₂SiO- und R⁴HSiO-Einheiten mit R⁴ und R⁵ gleich der obengenannten Bedeutung.

Die Organopolysiloxane (C) besitzen vorzugsweise eine durchschnittliche kinematischen Viskosität von 0,01 bis 500 000 mm²/s, besonders bevorzugt von 0,1 bis 100 000 mm²/s, insbesondere bevorzugt von 1 bis 10000 mm²/s jeweils gemessen nach DIN 53019 bei 25°C. Organopolysiloxane (C) sind nach in der Chemie gängigen Methoden herstellbar.

Als Hydrosilylierungskatalysator (D) können alle dem Stand der Technik bekannten Katalysatoren verwendet werden. Komponente (D) kann ein Platingruppenmetall sein, beispielsweise Platin, Rhodium, Ruthenium, Palladium, Osmium oder Iridium, eine metallorganische Verbindung oder eine Kombination davon. Beispiele für Komponente (D) sind Verbindungen wie Hexachloroplatin(IV)-säure, Platindichlorid, Platinacetylacetonat und Komplexe der besagten Verbindungen, die in einer Matrix oder einer kernschalenartigen Struktur eingekapselt sind. Zu den Platinkomplexen mit niedrigem Molekulargewicht der Organopolysiloxane gehören 1,3-Diethenyl-1,1,3,3-Tetramethyldisiloxan-Komplexe mit Platin. Weitere Beispiele sind Platinphosphitkomplexe oder Platinphosphinkomplexe. Für licht- oder UV-härtende Zusammensetzungen können beispielsweise Alkylplatinkomplexe wie Derivate von Cyclopentadienyltrimethylplatin(IV), Cyclooctadienyldimethylplatin(II) oder Diketonatokomplexe wie zum Beispiel Bisacetylacetonatoplatin(II) verwendet werden, um die Additionsreaktion mit Hilfe von Licht zu starten. Diese Verbindungen können in einer Harzmatrix eingekapselt sein. Vorzugsweise wird Komponente D in einer Konzentration von 0,1 bis 1000 Teile pro Million (ppm), bevorzugt von 0,5 bis 100 ppm und insbesondere bevorzugt von 1 bis 25 ppm eingesetzt, jeweils bezogen auf das Gewicht des Platingruppenmetalls und vernetzbare Siliconelastomerzusammensetzung X.

Die Härtungsrate kann gering sein, wenn der Bestandteil des Platingruppenmetalls bei unter 1 ppm liegt. Die Verwendung von mehr als 100 ppm des Platingruppenmetalls ist unwirtschaftlich oder setzt die Lagerstabilität der Siliconelastomerzusammensetzung X herab.

Der verstärkende Füllstoff F wird ausgewählt aus pyrogenen oder gefällten hydrophoben Kieselsäuren mit BET-Oberflächen von mindestens 50 m²/g sowie Rußen und Aktivkohlen wie Furnace-Ruß und Acetylen-Ruß und Siliconharzen, wobei Siliconharze F und pyrogene und gefällte hydrophobe Kieselsäuren mit BET-Oberflächen von mindestens 50 m²/g gemäß DIN 66131 und DIN 66132 (mit Stickstoff bestimmt) oder Gemische davon als verstärkende Füllstoffe F bevorzugt sind. Beispiele für Siliconharze F sind MQ-, MT-, MDQ-, MDT-, MTQ und MDTQ-Siliconharze, wobei M ausgewählt wird aus R₃SiO_{1/2}- und HR₂SiO_{1/2}- und R¹R₂SiO_{1/2}-, D ausgewählt wird aus R¹RSiO_{1/2}- und R₂SiO_{1/2}- und HRSiO_{1/2}-, T ausgewählt wird aus RSiO_{3/2}- und R¹SiO_{3/2}- und HSiO_{3/2}- und Q gleich SiO_{4/2}-Einheiten sind, wobei R die oben beschriebenen Bedeutungen von R⁴, und R¹ die Bedeutungen von R⁵ haben.

Bevorzugte pyrogene und gefällte hydrophobe Kieselsäuren haben eine BET-Oberfläche nach DIN 66131 und DIN 66132 zwischen 50 und 800 m²/g, besonders bevorzugt zwischen 100 und 500 m²/g und insbesondere bevorzugt zwischen 150 und 400 m²/g. Besonders bevorzugt werden pyrogene hydrophobe Kieselsäuren mit BET-Oberflächen zwischen 150 und 400 m²/g als Feststoffe F eingesetzt.

Vorzugsweise ist der verstärkende Feststoff F oberflächenbehandelt und dadurch hydrophob. Bevorzugte Feststoffe F weisen infolge einer Oberflächenbehandlung einen Kohlenstoffgehalt von mindestens 1,5 bis maximal 20 Gew.%, bevorzugt zwischen 1,8 und 10 Gew.%, besonders bevorzugt zwischen 2 bis 8 Gew.% auf. Besonders bevorzugt ist oberflächenbehandelte Kieselsäure, die 3 bis 6 Gew.% Si-gebundene, aliphatische Gruppen aufweist. Beispielsweise handelt es sich dabei um Si-gebundene Methyl oder Vinylgruppen. Hydrophobe Kieselsäuren, die als Feststoff F geeignet sind, sind dadurch gekennzeichnet, dass sie im Wesentlichen nicht mit Wasser benetzbar. Dies bedeutet erfindungsgemäß, dass die Methanolzahl des Feststoff F größer als 40, bevorzugt größer als 50 ist.

Dem Fachmann sind hydrophobierte Kieselsäuren seit langem bekannt. Die Hydrophobierung des Feststoff F kann in einem eigenen Prozessschritt erfolgen oder auch in Form einer in-situ Hydrophobierung durch Zugabe eines geeigneten Hydrophobierungsmittels zur Siliconelastomerzusammensetzung X erzielt werden. Methoden zur Oberflächenbehandlung und Hydrophobierung von Kieselsäuren sind dem Fachmann bekannt. Bevorzugt kann die Hydrophobierung mittels halogenfreier Silane erfolgen, wie beispielsweise in EP1433749A1 beschrieben. Beispiele für im Handel erhältliche hydrophobe Kieselsäuren sind HDK^{®} H18 und HDK^{®} H20 beladen mit der Gruppierung - [Si(CH₃)₂-O]ₙ, HDK^{®} H2000 beladen mit der Gruppierung -O-Si(CH3)3 (käuflich erhältlich bei der Wacker Chemie AG, München) sowie AEROSIL^{®} 972 und AEROSIL^{®} 805 (käuflich erhältlich bei der Fa. Evonik Degussa GmbH, Frankfurt am Main).

In einer bevorzugten Ausführungsform handelt es sich bei Feststoff F um Siliconharze F, insbesondere um ein MDT oder ein MQ Harz, bevorzugt um ein MQ Harz. Bevorzugte MQ Harze enthalten weniger als 10 mol%, bevorzugt weniger als 2 mol%, insbesondere bevorzugt weniger als 0,5 mol% D oder T Einheiten. Insbesondere bevorzugte MQ Harze sind im Wesentlichen frei von D oder T Einheiten.

Vorzugsweise ist das Siliconharz F bei 25 °C und dem Druck der umgebenden Atmosphäre, also 1013 hPa, fest.

Die Siliconharze F sind vorzugsweise solche, die ein Molekulargewicht Mw von mindestens 500, bevorzugt mindestens 900, besonders bevorzugt mindestens 1200, und höchstens 15000, bevorzugt höchstens 10000, besonders bevorzugt höchstens 8000 haben, wobei die Polydispersität höchstens 20, bevorzugt höchstens 18, besonders bevorzugt höchstens 16, insbesondere höchstens 15 ist.

### Molekulargewichtsverteilungen:

Molekulargewichtsverteilungen werden als Gewichtsmittel Mw und als Zahlenmittel Mn bestimmt, wobei die Methode der Gelpermeationschromatographie (GPC bzw. Size Exclusion Chromatographie (SEC)) Anwendung findet mit Polystyrol Standard und Brechnungsindexdetektor (RI-Detektor). Wo nicht anders ausgewiesen wird THF als Eluent verwendet und DIN 55672-1 angewendet. Die Polydispersität ist der Quotient Mw/Mn.

Bevorzugte Siliconharze F enthalten mindestens 1 mol%, bevorzugt mindestens 2 mol% Einheiten ausgewählt aus R¹R₂SiO_{1/2}-, R¹RSiO_{1/2}- und R¹SiO_{3/2}-, vorzugsweise R¹R₂SiO_{1/2}- Einheiten.

Vorzugsweise enthalten die Siliconharze F 0,1 bis 10 Gew.%, bevorzugt 0,5 bis 8 Gew.%, besonders bevorzugt 1 bis 6 Gew.%, Alkoxygruppen als Rest R. Besonders geeignet und somit bevorzugt sind Methoxy-, Ethoxy-, iso-Propoxy- und tert.-Butoxyreste.

Bevorzugte Reste R sind gesättigte aliphatische Gruppen, vorzugsweise die Methyl, Ethyl und iso-Octyl-Gruppe, besonders bevorzugt Methyl.

Bevorzugte Reste R¹ sind ungesättigte aliphatische Gruppen, vorzugsweise Vinyl Gruppen.

Insbesondere bevorzugt als Füllstoff F sind Vinylgruppenhaltige MQ Harze enthaltend 45 bis 65 mol%, bevorzugt 50 bis 60 mol%, Q Einheiten und 30 bis 50 mol%, bevorzugt 35 bis 45 mol%, M Einheiten der Form R₃SiO_{1/2}- und 2 bis 10 mol%, bevorzugt 3 bis 8 mol%, M Einheiten der Form R¹R₂SiO_{1/2}-, wobei R vorzugsweise Methyl und R¹ vorzugsweise Vinyl ist.

In den vernetzbaren Siliconelastomerzusammensetzungen X wird der verstärkende Füllstoff F bevorzugt als einzelne oder ebenfalls bevorzugt als eine Mischung mehrerer Füllstoffe F verwendet.

Die Siliconelastomerzusammensetzung X bildet zusammen mit dem verstärkenden Füllstoff F die Mischung B.

Pro 100 Gew.-Teile der vernetzbaren Siliconelastomerzusammensetzung X enthält die Mischung B vorzugsweise 5 bis 200 Gew.-Teile, besonders bevorzugt 10 bis 100 Gew.-Teile, insbesondere bevorzugt 15 bis 50 Gew.-Teile an verstärkendem Füllstoff F.

Neben dem verstärkenden Füllstoff F kann die Mischung B auch nichtverstärkende Füllstoffe enthalten. Beispiele für nichtverstärkende Füllstoffe sind Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen-, oder Zinkoxide bzw. deren Mischoxide, Bariumsulfat, Calciumcarbonat, Gips, Siliciumnitrid, Siliciumcarbid, Bornitrid, Glas- und Kunststoffpulver.

Weiterhin können die Tröpfchen zusätzlich zu mindestens einem Siloxan oder Silan, weitere Bestandteile B ausgewählt aus Katalysatoren, Füllstoffen, Inhibitoren, Hitzestabilisatoren, Lösungsmitteln, Weichmachern, Farbpigmenten, Sensibilisatoren, Photoinitiatoren, Haftvermittlern, ... enthalten.

Silica S sind vorzugsweise teilweise mit Wasser benetzbare pyrogenen und gefällten Kieselsäuren oder Gemische davon, die eine spezifische BET-Oberfläche von 30 bis 500 m²/g, besonders bevorzugt 100 bis 300 m²/g, aufweisen, wobei pyrogene Kieselsäure besonders bevorzugt sind. Die BET-Oberfläche wird nach bekannten Verfahren gemessen, bevorzugt gemäß Deutscher Industrie Norm DIN 66131 und DIN 66132.

Vorzugsweise ist Silica S mit einem geeigneten Hydrophobiermittel oberflächenbehandelt und dadurch hydrophob. Die Hydrophobierung ist so auszuführen, dass die Silica S noch teilweise mit Wasser benetzbar ist. Dies bedeutet erfindungsgemäß, dass die Methanolzahl der Silica S kleiner als 40, bevorzugt kleiner als 30 ist. Bevorzugte Silica S weisen infolge einer Oberflächenbehandlung einen Kohlenstoffgehalt von mindestens 0,2 bis maximal 1,5 Gew.%, bevorzugt zwischen 0,4 und 1,4 Gew.%, besonders bevorzugt zwischen 0,6 bis 1,3 Gew.% auf. Beispielsweise handelt es sich bei den hydrophoben Gruppen um Si-gebundene Methyl oder Vinylgruppen. Methoden zur Hydrophobierung von Kieselsäuren sind dem Fachmann bekannt.

Bevorzugt als Silica S sind silanisierte pyrogene Kieselsäuren mit einer Methanolzahl von kleiner 30.

Ganz besonders bevorzugt sind teilweise mit Wasser benetzbare Kieselsäuren wie beschrieben in EP 1433749 A1 und DE 10349082 A1.

Dabei ist die mittlere Partikelgröße des partikulären Feststoffs F oder gegebenenfalls Aggregate der Partikel bevorzugt kleiner als der mittlere Durchmesser d₅₀ der Tröpfchen ohne die feinteiligen Partikel.

Die mittlere Partikelgröße des partikulären Feststoffs F ist kleiner als 1000 nm, bevorzugt zwischen 10 nm und 800 nm, besonders bevorzugt zwischen 50 nm und 500 nm und ganz besonders bevorzugt zwischen 75 nm und 300 nm, jeweils gemessen als mittleren hydrodynamischen Äquivalentdurchmesser mittels Photonenkorrelationsspektroskopie in 173° Rückstreuung mit eine Nanosizer ZS der Fa. Malvern.

Zur Bestimmung der Methanolzahl werden definierte Mischungen von Wasser mit Methanol hergestellt, und dann die Oberflächenspannungen dieser Gemische mit bekannten Methoden bestimmt. In einem getrennten Experiment werden diese Wasser-Methanol-Mischungen mit definierten Mengen an Partikeln überschichtet und unter definierten Bedingungen geschüttelt (beispielweise schwaches Schütteln mit der Hand oder mit einem Taumelmischer für ca. 1 Minute). Bestimmt wird das Wasser-Alkohol-Gemisch, bei dem die Partikel eben noch nicht einsinken und das Wasser-Alkohol-Gemisch mit höherem Alkoholgehalt, bei dem die Partikel eben einsinken. Die Oberflächenspannung des letzteren Alkohol-Wasser-Gemisches liefert die kritische Oberflächenenergie γ_{crit} als Maß für die Oberflächenenergie γ der Partikel. Der Methanolgehalt in Wasser ergibt die Methanolzahl.

Vorzugsweise ist der verstärkende Füllstoff F hydrophober als die Silica S.

Die Partikel P weisen vorzugsweise eine Größe x50 von 1 bis 100 µm, bevorzugt von 2 bis 50 µm, besonders bevorzugt von insbesondere 3 bis 20 µm, insbesondere von 3 bis 8 µm auf.

Die Partikel P sind amphiphil, das heißt, sie sind sowohl hydrophil (also wasserliebend) als auch lipophil (also fettliebend). Dies bedeutet, dass die Partikel P sowohl in polaren Lösungsmitteln, wie zum Beispiel Wasser oder Alkohole, als auch in unpolaren Lösungsmitteln, wie zum Beispiel aliphatische Kohlenwasserstoffe, oder Polydimethylsiloxanöle, ohne Zusatz weiterer Dispergierhilfsmittel oder Additive, wie zum Beispiel organische Emulgatoren oder andere oberflächenaktive Substanzen, gut dispergierbar sind. Dies ist ein wesentlicher Vorteil der Partikel P im Vergleich zu unbeschichteten Siliconelastomer Partikeln, welche sehr hydrophob sind und ohne Verwendung unerwünschter Hilfsstoffe, wie organische Emulgatoren, nicht in polaren Lösungsmitteln, wie zum Beispiel Wasser oder Alkohole, dispergierbar sind. Bei den Partikeln P ist die Silica S an der Oberfläche fest gebunden, dadurch bleiben die amphiphilen Eigenschaften bei der Dispergierung in einem Lösungsmittel erhalten. Dies ist ein wesentlicher Vorteil gegenüber Siliconelastomer Partikel nach dem Stand der Technik, die nach der Härtung mit Silica nachbehandelt werden, da bei diesen nicht erfindungsgemäßen Partikel die absorbierte Silica nicht permanent gebunden ist. Nachteilig an diesen Partikeln nach dem Stand der Technik ist, dass nicht-permanent gebundene Silica bei der Dispergierung der Partikel in einem Lösungsmittel ganz oder teilweise abgelöst wird, wodurch die Partikel stark hydrophob werden und nicht mehr in polaren Lösungsmitteln, wie zum Beispiel Wasser, dispergierbar sind.

Ein weiterer Gegenstand der Erfindung ist ein Verfahren zur Herstellung der Partikel P, aufgebaut aus einem Kern K enthaltend vernetzte Siliconelastomerzusammensetzung X und verstärkenden Füllstoff F und einer Hülle H aus Silica S, bei dem in einem ersten Schritt eine Dispersion A enthaltend Silica S und Wasser mit einer Mischung B enthaltend vernetzbare Siliconelastomerzusammensetzung X und verstärkenden Füllstoff F vermischt wird, wobei eine kontinuierliche Wasser enthaltende Phase und eine diskontinuierliche Phase enthaltend vernetzbare Siliconelastomerzusammensetzung X und verstärkenden Füllstoff F entstehen und in einem zweiten Schritt die diskontinuierliche Phase vernetzt wird, wobei die Partikel P entstehen.

Bei der Vernetzung im zweiten Schritt wird die kontinuierliche Phase nicht verändert.

Vorzugsweise enthält die kontinuierliche Phase mindestens 80 Gew.-%, insbesondere mindestens 90 Gew.-% Wasser.

Vorzugsweise bildet sich ein Dreiphasengemisch, enthaltend Emulsionen von in Wasser schwer löslicher und mit Wasser nicht mischbarer Siliconelastomerzusammensetzung X, die mittels teilhydrophobierter Kieselsäuren in der Wasserphase stabilisiert sind (Pickering Emulsionen). Die Siliconelastomerzusammensetzung X wird in einem zur Herstellung der Partikel P geeigneten Verfahren nach dem Emulgieren vernetzt. Gegebenenfalls müssen kondensierbare Siliconelastomerzusammensetzungen X hydrolysiert werden, wenn es sich dabei beispielsweise um alkoxy- oder acetoxysubstituierte Silane oder Siloxane handelt. Bei ausreichend reaktiven Siliconzusammensetzungen X, bewirkt dabei bereits das vorhandene Wasser gegebenenfalls die Hydrolyse und nachfolgend die Kondensation. Bei weniger reaktiven Siliconelastomerzusammensetzungen X sind Katalysatoren erforderlich, die gegebenenfalls die Hydrolyse und die Kondensation der Siloxane und Silane bewirken. Diese Katalysatoren können sowohl Säuren als auch Basen sein oder auch Metallkatalysatoren, wie Gruppe IV Übergangsmetallkatalysatoren, Zinnkatalysatoren, wie sie üblicherweise zur Beschleunigung von Hydrolysen, Kondensationsreaktionen oder Umesterungsreaktionen verwendet werden. Als Säuren oder Basen kommen neben den bekannten Mineralsäuren und Metallsalzen auch saure oder basische Silane oder Siloxane in Frage.

Bevorzugte basische Katalysatoren sind NaOH, KOH, Ammoniak und NEt₃.

Bevorzugte saure Katalysatoren sind p-Toluolsulfonsäure, wässrige oder gasförmige HCl, Schwefelsäure.

Falls das Verfahren eine Polymerisationsreaktion umfasst, kann es sich dabei beispielsweise um eine radikalische Polymerisationsreaktion eines olefinisch ungesättigten Siloxans oder Silans handeln.

In einer besonderen Ausführungsform werden der Mischung B Übergangsmetallkatalysatoren wie z.B. Platinkatalysatoren, zugesetzt, insbesondere dann, wenn es Siloxane enthält, die in einer Hydrosilylierungsreaktion miteinander reagieren können.

Das Verfahren ist im zweiten Schritt so auszuführen, dass die die diskontinuierliche Phase stabilisierende Silica S während der Vernetzung mit der Oberfläche der die Kerne bildenden Mischung B reagieren oder zumindest eine stabile Wechselwirkung, wie Wasserstoffbrückenbindungen, van der Waals Wechselwirkungen oder eine andere gerichtete Wechselwirkung, bzw. eine Kombination solcher gerichteten Wechselwirkungen eingehen, so dass die Silica S permanent auf den Kernen, die aus der Mischung B gebildet werden, verankert sind.

Die Größe der Partikel P lässt sich zum Beispiel durch die Emulgiertechnik, also etwa durch Größen wie die eingetragene Scherenergie, den Volumenanteil der Mischung B, die Menge der Silica S, den pH-Wert der kontinuierlichen Wasserphase und deren Ionenstärke, die Viskosität, die Reihenfolge der Dosierung, die Dosiergeschwindigkeit, oder durch die Reaktionsführung steuern, das heißt zum Beispiel durch die Reaktionstemperatur, die Reaktionszeit, die Konzentrationen der eingesetzten Rohstoffe. Die Auswahl und die Menge des gegebenenfalls eingesetzten Hydrolyse- und Kondensationskatalysators hat ebenfalls einen Einfluss auf die Partikelgröße.

Bei Verwendung einer Emulgiertechnik, die die Herstellung kleinerer Tröpfchen erlaubt, gelangt man nach diesem Verfahren zu kleinen oberflächenstrukturierten Partikeln P. Hierzu kann man beispielsweise andere Scherenergien oder eine Auswahl anderer Silica S zur Stabilisierung der Mischung B in Wasser verwenden.

Vorzugsweise wird der verstärkende Füllstoff F und optionale nicht-verstärkende Füllstoffe oder optionale weitere Bestandteile mit der Siliconelastomerzusammensetzung X in einem ersten Schritt homogen vermischt, bevor die Mischung B in einem weiteren Schritt mit Dispersion A emulgiert und anschließend unter Ausbildung des Partikels P vernetzt wird. Dadurch wird sichergestellt, dass sich alle Füllstoffe und optionale weitere Bestandteile als Teil der Mischung B nach dem Emulgieren im Inneren der Tröpfchen und nach der Vernetzung im Inneren des Kerns K der Partikel P befinden.

Bevorzugt sind die Pickering Emulsionen E der Mischung B im Wesentlichen frei von herkömmlichen, bei Raumtemperatur und dem Druck der umgebenden Atmosphäre nicht-partikulären flüssigen und festen, organischen oberflächenaktiven Substanzen, wie nichtionischen, kationischen und anionischen Emulgatoren ("organische Emulgatoren").

Organische Emulgatoren heißt hier keine Partikel und Kolloide, sondern Moleküle und Polymere, folgend der Definition von Molekülen, Polymeren, Kolloide und Partikel wie gegeben in Dispersionen und Emulsionen, G. Lagaly, O. Schulz, R. Zindel, Steinkopff, Darmstadt 1997, ISBN 3-7985-1087-3, S.1-4.

Im Allgemeinen weisen diese organischen Emulgatoren eine Größe kleiner 1 nm, eine Molmasse < 10 000 g/Mol, einen Kohlenstoffgehalt > 50 Gew.-%, bestimmbar durch Elementaranalyse, sowie eine Mohs'sche Härte kleiner als 1 auf. Zugleich weisen die organischen Emulgatoren, von denen die erfindungsgemäßen Emulsionen im Wesentlichen frei sind, zumeist eine Löslichkeit in Wasser bei 20°C und dem Druck der umgebenden Atmosphäre, also 900 bis 1100 hPa, homogen oder in Micellen-Form von größer 1 Gew.-% auf.

Die Pickering Emulsionen E der Mischung B können solche organischen Emulgatoren bis zu einer maximalen Konzentration von kleiner als 0,1 mal, bevorzugt kleiner als 0,01 mal, besonders bevorzugt kleiner als 0,001 mal, insbesondere kleiner als 0,0001 mal der kritischen Micellkonzentration dieser organischen Emulgatoren in der Wasserphase enthalten; dies entspricht einer Konzentration dieser organischen Emulgatoren, bezogen auf das Gesamtgewicht der erfindungsgemäßen Dispersion von kleiner 10 Gew.-%, bevorzugt kleiner 2 Gew.-%, besonders bevorzugt kleiner 1 Gew.-%, insbesondere 0 Gew.-%.

Zur Herstellung der partikelstabilisierten Pickering Emulsion E im ersten Schritt können sämtliche dem Fachmann bekannten Methoden zur Herstellung von Emulsionen eingesetzt werden. Es zeigte sich jedoch, dass sich besonders gut geeignete Emulsionen zur Erzeugung der Partikel P gemäß der folgenden Verfahren erhalten lassen:
Verfahren 1:
   - Vorlegen einer hochkonzentrierten Dispersion A , wobei das vorgelegte Volumen so bemessen ist, dass es die Gesamtmenge an benötigen Silica S und nur eine Teilmenge an Wasser enthält.
   - Langsames Zudosieren des Gesamtvolumens an Mischung B unter ständigem Homogenisieren z.B. mittels eines schnellaufenden Rührers, schnellaufenden Dissolvers oder eines Rotor-Stator-Systems.
   - Anschließend langsames Zudosieren des gewünschten Restvolumens an Wasser gegebenenfalls unter ständigem Homogenisieren z.B. mittels eines schnellaufenden Rührers, schnellaufenden Dissolvers oder eines Rotor-Stator-Systems.
Verfahren 2:
   - Vorlegen der Dispersion A, wobei das vorgelegte Volumen so bemessen ist, dass es die Gesamtmenge an benötigtem Silica S und Wasser enthält.
   - Langsames Zudosieren des Gesamtvolumens an Mischung B unter ständigem Homogenisieren z.B. mittels eines schnellaufenden Rührers, schnellaufenden Dissolvers, eines Rotor-Stator-Systems oder mittels Kapillaremulgators.
Verfahren 3:
   - Vorlegen des Gesamtvolumens an Mischung B.
   - Langsames Zudosieren einer hochkonzentrierten Dispersion A, unter ständigem Homogenisieren z.B. mittels eines schnellaufenden Rührers, schnellaufenden Dissolvers oder eines Rotor-Stator-Systems, wobei das zudosierte Volumen so bemessen ist, dass es die Gesamtmenge an benötigter Silica S und nur eine Teilmenge an Wasser enthält.
   - Anschließend langsames Zudosieren des gewünschten Restvolumens an Wasser gegebenenfalls unter ständigem Homogenisieren z.B. mittels eines schnellaufenden Rührers, schnellaufenden Dissolvers oder eines Rotor-Stator-Systems
Verfahren 4:
   - Vorlegen des Gesamtvolumens an Mischung B.
   - Langsames Zudosieren der Dispersion A unter ständigem Homogenisieren z.B. mittels eines schnellaufenden Rührers, schnellaufenden Dissolvers oder eines Rotor-Stator-Systems, wobei das zudosierte Volumen so bemessen ist, dass es die Gesamtmenge an benötiger Silica S und Wasser enthält.
Verfahren 5:
   - Vorlegen des Gesamtvolumens an Mischung B und der Dispersion A, wobei das vorgelegte Volumen so bemessen ist, dass es die Gesamtmenge an benötigter Silica S und Wasser enthält.
   - Gemeinsames Homogenisieren z.B. mittels eines schnellaufenden Rührers, schnellaufenden Dissolvers oder eines Rotor-Stator-Systems.
Verfahren 6:
   - Vorlegen des Gesamtvolumens an Mischung B und einer hochkonzentrierten Dispersion A, wobei das vorgelegte Volumen so bemessen ist, dass es die Gesamtmenge an benötigter Silica S und eine Teilmenge an Wasser enthält.
   - Gemeinsames Homogenisieren z.B. mittels eines schnellaufenden Rührers, schnellaufenden Dissolvers oder eines Rotor-Stator-Systems.
   - Anschließend langsames Zudosieren des gewünschten Restvolumens an Wasser gegebenenfalls unter ständigem Homogenisieren z.B. mittels eines schnellaufenden Rührers, schnellaufenden Dissolvers oder eines Rotor-Stator-Systems.

Bevorzugt sind Verfahren 1, 2, 5 und 6, wobei Verfahren 2 und 5 besonders bevorzugt sind und Verfahren 5 insbesondere bevorzugt ist.

Das Homogenisieren erfolgt vorzugsweise in mindestens einem Verfahrensschritt für mindestens 30 Sekunden, bevorzugt mindestens 1 Minute.

Die Herstellung der Dispersion A der Silica S in Wasser, die in der erfindungsgemäßen Emulsion die homogene Phase bildet, kann grundsätzlich gemäß den bekannten Verfahren zur Herstellung von Partikeldispersionen erfolgen, wie das Einarbeiten mittels Rührorganen mit hoher Scherwirkung wie schnellaufende Rührer, schnellaufende Dissolver, Rotor-Stator-Systeme, Ultraschalldispergatoren oder Kugel- bzw. Perlmühlen.

Die Konzentration der Silica S in der Dispersion A beträgt dabei zwischen 1 und 80 Gew.%, bevorzugt zwischen 10 und 60 Gew.%, besonders bevorzugt zwischen 10 und 40 Gew.% und ganz besonders bevorzugt zwischen 12 und 30 Gew.%.

In einem optionalen Verfahrensschritt wird die Pickering Emulsion E mit Wasser gegebenenfalls unter ständigem Homogenisieren z.B. mittels eines schnellaufenden Rührers, schnellaufenden Dissolvers oder eines Rotor-Stator-Systems verdünnt.

Die beschriebenen Verfahren können sowohl in kontinuierlicher als auch in diskontinuierlicher Form durchgeführt werden. Bevorzugt ist die kontinuierliche Form.

Die Temperatur im ersten Schritt liegt zwischen 0 °C und 80 °C, bevorzugt zwischen 10 °C und 50 °C, besonders bevorzugt zwischen 20 °C und 40 °C.

Der Emulgierprozess kann bei Normaldruck, also bei 900 bis 1100 hPa, bei erhöhtem Druck oder im Vakuum durchgeführt werden. Bevorzugt ist der Prozess bei Normaldruck.

Die Konzentration der Silica S im Dreiphasengemisch aus Dispersion A und Mischung B des ersten Schritts beträgt dabei zwischen 1 und 80 Gew.%, bevorzugt zwischen 2 und 50 Gew.%, besonders bevorzugt zwischen 3 und 30 Gew.% und ganz besonders bevorzugt zwischen 4 und 20 Gew.%.

Die Konzentration der Siliconelastomerzusammensetzung X im Dreiphasengemisch aus Dispersion A und Mischung B des ersten Schritts beträgt dabei zwischen 1 und 80 Gew.%, bevorzugt zwischen 20 und 76 Gew.%, besonders bevorzugt zwischen 40 und 72 Gew.% und ganz besonders bevorzugt zwischen 50 und 70 Gew.%.

Die Konzentration Wasser im Dreiphasengemisch aus Dispersion A und Mischung B des ersten Schritts beträgt dabei zwischen 5 und 80 Gew.%, bevorzugt zwischen 10 und 70 Gew.%, besonders bevorzugt zwischen 15 und 60 Gew.% und ganz besonders bevorzugt zwischen 20 und 40 Gew.%.

Ausgehend vom dem oben beschriebenen Dreiphasengemisch lassen sich die Partikel P in einem zweiten Schritt nach folgenden Verfahren erhalten:
Das Dreiphasengemisch wird vorzugsweise durch Zugabe von Wasser auf einen Massenanteil von Wasser von 50 Gew.-% bis 90 Gew.-%, besonders bevorzugt 40 Gew.-% bis 80 Gew.-% verdünnt.

Das Dreiphasengemisch wird im zweiten Schritt vorzugsweise unter geringer Scherwirkung beispielsweise mittels eines langsam laufenden Dissolvers, Rotor-Stators oder Balkenrührers bis zur vollständigen inneren Vernetzung der Partikel P gerührt oder mittels geeigneter Aggregate geschüttelt.

Die Dauer des zweiten Verfahrensschritts ist vorzugsweise kürzer als 120 h, bevorzugt liegt sie zwischen 0 h bis 48 h, besonders bevorzugt 0,1 h bis 24 h und in einer speziellen Ausführung 0,25 h bis 12 h.

Gegebenenfalls können dem Dreiphasengemisch aus Dispersion A und Mischung B des ersten Schritts die Vernetzung beschleunigende und vervollständigende Katalysatoren wie oben genannt zugesetzt werden. Die Zugabe kann dabei vor der Herstellung des Dreiphasengemischs direkt in die diskontinuierliche Phase oder kontinuierliche Phase, während der Emulgierung oder nachträglich in das fertige Dreiphasengemisch erfolgen.

Die Einsatzmenge der gegebenenfalls zugesetzten Katalysatoren liegt dabei in dem für Katalysatoren typischen Mengenbereich.

Die Reaktionstemperatur während der Vernetzungsphase liegt zwischen 0 °C und 100 °C, bevorzugt zwischen 10 °C und 80 °C und besonders bevorzugt zwischen 15 °C und 60 °C.

Gegebenenfalls kann die Reaktion unter einer InertgasAtmosphäre wie Stickstoff, Argon oder Kohlendioxid durchgeführt werden. Der Sauerstoffanteil ist dann kleiner 15 Vol.%, bevorzugt kleiner 10 Vol.% und besonders bevorzugt kleiner 5 Vol.%.

Der pH-Wert der Reaktionsmischung liegt zwischen pH 10 und 1, bevorzugt zwischen pH 9 und 3, besonders bevorzugt zwischen pH 8 und 4 und in einer speziellen Ausführung zwischen pH 7 und 5.

Gegebenenfalls können dem Dreiphasengemisch wasserlösliche organische Lösungsmittel wie Alkohole wie Methanol, Ethanol oder i-Propanol oder Ketone wie Aceton oder MEK oder Ether wie THF oder andere zugesetzt werden. Diese können im ersten Schritt oder vor oder während des zweiten Schritts zugesetzt werden.

Gegebenenfalls können dem Dreiphasengemisch Dispergierhilfsmittel, Schutzkolloide und / oder Tenside zugesetzt werden. Diese können im ersten Schritt oder vor oder während des zweiten Schritts zugesetzt werden.

Bevorzugt enthält das Dreiphasengemisch weniger als 5 Gew.-%, besonders bevorzugt weniger als 1 Gew.-%, insbesondere weniger als 0,1 Gew.-%, Dispergierhilfsmittel, Schutzkolloide und Tenside. In einer speziellen Ausführung ist das Dreiphasengemisch frei von Dispergierhilfsmitteln, Schutzkolloiden und Tensiden.

Gegebenenfalls enthält das Dreiphasengemisch anorganische oder organische Elektrolyte. Diese können entweder nach dem ersten Schritt, während des zweiten Schritts oder nach Abschluss des zweiten Schritts zugesetzt werden.

Die Ionenstärke des Dreiphasengemischs liegt dabei zwischen 0,01 mmol/l und 1 mol/l, bevorzugt zwischen 0,1 mmol/l und 500 mmol/l und besonders bevorzugt zwischen 0,5 mmol/l und 100 mmol/l.

Gegebenenfalls kann die Oberfläche der Partikel P durch Behandlung mit reaktiven Silanen oder Siloxanen modifiziert werden. Diese können entweder unmittelbar nach Abschluss der Herstellung der Pickering-Emulsion im ersten Schritt, während der Reaktionsphase oder nach Abschluss der Reaktionsphase im zweiten Schritt zugesetzt werden, vor der Isolierung der Partikel P oder nach der Isolierung der Partikel in flüssiger oder fester Phase. Die Behandlung ist dabei so durchzuführen, dass eine kovalente, chemische Anbindung des Silans oder Siloxans an den Partikeln erfolgt. Entsprechende Methoden und Verfahren sind dem Fachmann bekannt.

Der Feststoffanteil der Partikel P im Dreiphasengemisch bestehend aus der Summe der eingesetzten Feststoffe und dem Polymerisationsprodukt des polyadditionsfähigen, polykondensationsfähigen oder polymerisierbaren Materials liegt zwischen 5 Gew.-% und 70 Gew.-%, bevorzugt zwischen 10 Gew.-% und 50 Gew.-% und besonders bevorzugt zwischen 20 Gew.-% und 40 Gew.-%.

Gegebenenfalls kann das Dreiphasengemisch nach dem zweiten Schritt weiterhin unter Rühren gelagert werden. Dies kann beispielsweise mittels Balken- oder Ankerrührer erfolgen.

In einer bevorzugten Ausführungsform werden die Partikel P isoliert, vorzugsweise durch Sedimentation, Abfiltrieren oder Zentrifugieren, bevorzugt durch Filtration oder Zentrifugieren, besonders bevorzugt durch Zentrifugation.

Nach dem Isolieren werden die Partikel P vorzugsweise mit einer Waschflüssigkeit gewaschen, die vorzugsweise ausgewählt wird aus VE-Wasser, Methanol, Ethanol und Gemischen davon.

In einer bevorzugten Ausführungsform werden die Partikel P in Pulverform von der wässrigen Phase isoliert. Dies kann beispielsweise mittels Filtration, Sedimentation, Zentrifugieren oder durch Entfernen der flüchtigen Bestandteile durch Trocknen in Öfen oder Trocknern oder durch Sprühtrocknung oder durch Anlegen eines entsprechenden Vakuums erfolgen.

Durch Sprühtrocknen läßt sich ohne weitere Bearbeitung eine sehr hohe Feinheit der Partikel P erreichen. Statisch getrocknete Partikel P neigen zur Ausbildung loser Agglomerate, die durch geeignete Mahlverfahren, zum Beispiel Kugelmühle oder Luftstrahlmühle deagglomeriert werden können.

### Messmethoden

- Feststoffgehalt: 10 g wässrige Dispersion werden in einer Porzellanschale mit der gleichen Menge Ethanol versetzt und in einem N₂-gespülten Trockenschrank bei 150 °C zur Gewichtskonstanz eingedampft. Die Masse mₛ des trockenen Rückstandes ergibt den Feststoffgehalt gemäß Feststoffgehalt / % = mₛ * 100 / 10 g.
- mittlerer Partikeldurchmesser (x50-Wert):
   Die Bestimmung des d₅₀-Werts erfolgte mit einem Camsizer X2 von Retsch Technology (Messprinzip: Dynamische Bildanalyse nach ISO 13322-2, Messbereich: 0,8 µm - 30 mm, Art der Analyse:
   Trockenmessung von Pulvern und Granulaten, Dispergierdruck = 2 bar) .
- Kohlenstoffgehalt %C bestimmt mittels Elemtaranalyse auf Kohlenstoff; Verbrennen der Probe bei über 1000 °C im O₂-Strom, Detektion und Quantifizierung des entstehenden CO₂ im IR; Gerät LECO 244
- Methanolzahl: Zur Bestimmung der Methanolzahl werden definierte Mischungen von Wasser mit Methanol hergestellt. In einem getrennten Experiment werden diese Wasser-Methanol-Mischungen mit gleichem Volumen an getrockneten Partikeln überschichtet und unter definierten Bedingungen geschüttelt (beispielweise schwaches Schütteln mit der Hand oder mit einem Taumelmischer für ca. 1 Minute). Bestimmt werden das Wasser-Alkohol-Gemisch, bei dem die Partikel eben noch nicht einsinken und das Wasser-Alkohol-Gemisch mit höherem Alkoholgehalt, bei dem die Partikel eben einsinken. Letzterer Methanolgehalt in Wasser ergibt die Methanolzahl.
- Die kinematische Viskosität wird gemessen nach DIN 53019 bei 25 °C.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiele

### Beispiel 1: Herstellung einer wässrigen Kieselsäuredispersion A

1300 g einer teilhydrophoben pyrogenen Kieselsäure mit einem Restsilanolgehalt von 71% und einem Kohlenstoffgehalt von 0,95%, erhalten durch Umsetzung einer hydrophilen Ausgangskieselsäure mit einer spezifischen BET-Oberfläche von 200 m²/g (erhältlich unter der Bezeichnung HDK^{®} N20 bei der Wacker-Chemie GmbH, München) mit Dimethyldichlorsilan gemäß EP 1433749 A1, werden portionsweise an einem Labo-Top Planetendissolver der Fa. PC Laborsystem, CH, bei 650 rpm in 5200 g vollentsalztes (VE-)Wasser eingerührt. Nach vollständiger Zugabe der Kieselsäure wird noch 60 min bei 650 rpm nachdispergiert. Es wird eine hochviskose Dispersion mit 20% Feststoffgehalt und einem pH Wert von 4,2 erhalten.

### Beispiel 2: Allgemeine Vorgehensweise zur Vermischung von Dispersion A enthaltend Silica S und Wasser mit einer Mischung B mittels Dissolver

Schritt 1: Die in Beispiel 1 beschriebenen Kieselsäuredispersion wird in ein geeignetes Rührgefäß eingewogen und mit einem Labo-Top Planetendissolver der Fa. PC Laborsystem, CH, bei 6000 U/min für 10 min aufgerührt. Dabei nimmt die Viskosität der Dispersion ab. Optional wird VE-Wasser zugegeben und homogen vermischt. Die vermischte Siliconölkomponente hergestellt nach einem der Beispiele 5, 6 oder 7 werden zur aufgerührten Kieselsäuredispersion gegeben und am Dissolver 10 min bei 6000 U/min und Wasserkühlung homogenisiert. Dabei sollte die Temperatur der Mischung nicht über 35 °C steigen. Es resultiert eine weiße, hochviskose Masse.

Schritt 2: Die hochviskose Masse aus Verfahrensschritt 1 wird bei 1000 U/min durch Zugabe von drei gleich großen Portionen VE-Wasser auf 30% Siliconöl-Gehalt verdünnt. Nach jeder Portion VE-Wasser wird 3 Minuten bei 1000 U/min gerührt. Es entsteht eine dünnflüssige, weiße O/W-Emulsion.

### Beispiel 3: Allgemeine Vorgehensweise zur Vermischung von Dispersion A enthaltend Silica S und Wasser mit einer Mischung B mittels Ultra-Turrax

Schritt 1: Die in Beispiel 1 beschriebenen Kieselsäuredispersion wird in einem geeigneten 1000 mL Edelstahlgefäß eingewogen und mit einem Ultra-Turrax T50 bei 10000 U/min für 10 min aufgerührt. Dabei nimmt die Viskosität der Dispersion ab. Optional wird VE-Wasser zugegeben und homogen vermischt. Die vermischte Siliconölkomponente hergestellt nach einem der Beispiele 5, 6 oder 7 werden zur aufgerührten Kieselsäuredispersion gegeben und anschließend mittels Ultra-Turrax 10 min bei 10000 U/min und Eiskühlung homogenisiert. Dabei sollte die Temperatur der Mischung nicht über 35 °C steigen. Es resultiert eine weiße, hochviskose Masse.

Schritt 2: Die hochviskose Masse aus Schritt 1 wird durch Zugabe von drei gleich großen Portionen VE-Wasser auf 30% Siliconöl-Gehalt verdünnt. Nach jeder Portion VE-Wasser wird 3 Minuten bei 6000 U/min gerührt. Es entsteht eine dünnflüssige, weiße O/W-Emulsion.

**Beispiel 4:** Allgemeine Vorgehensweise zur Herstellung von erfindungsgemäßen Silica-beschichteten Silicone-Elastomer Micropartikeln P aus Pickering Emulsionen von Mischung B Zu 250 g der polyadditionsfähigen Pickering Emulsion hergestellt nach Beispiel 2 oder Beispiel 3 werden mittels eines Flügelrührers bei 200 U/min 20 ppm Karstedt-Katalysator (bezogen auf die Menge an Platin) als 1 Gew.%-ige Lösung in Vinylgruppen-haltigen Polydimethylsiloxans der Viskosität 1000 mm²/s (25 °C), bei dem beide Kettenenden mit einer Dimethylvinylsilyl-Gruppe geblockt sind, gemischt und 24 h bei 80 °C gerührt. Es resultiert eine weiße, dünnflüssige Dispersion. Zur Isolierung werden die Partikel P abfiltriert und 24 h bei 80 °C im Trockenschrank getrocknet. Man erhält ein feines, weißes Pulver.

### Beispiel 5: Polyadditionsfähige, Siliconharz-verstärkte Mischung B

375 g eines vinyldimethylsiloxy-terminierten Polydimethylsiloxans mit einer Viskosität von 1 000 mm²/s (25°C) und 264 g eines vinyldimethylsiloxy-terminierten Polydimethylsiloxans mit einer Viskosität von 20 000 mm²/s (25°C) wurden mit einem Flügelrührer homogen vermischt. Anschließend wurden 274 g eines Vinylgruppen-haltigen Siliconharzes der Zusammensetzung [Me₃SiO_{1/2}]_{26,65} [ViMe₂SiO_{1/2}]_{3,72} [SiO_{4/2}]_{42,78} [HO_{1/2}]_{1,02} [EtO_{1/2}]_{5,93} (Molekulargewicht laut SEC (Eluent Toluol): Mw = 5300 g/mol; Mn = 2560 g/mol) zugegeben und bis zur vollständigen Lösung gerührt. Die so erhaltene Grundmasse wurde mit 114 g eines Mischpolymerisats aus Dimethylsiloxy-, Methylhydrogensiloxy- und Trimethylsiloxy-Einheiten mit einer Viskosität von 40 mm²/sbei 25°C und einem SiH-Gehalt von 0,40% homogen vermischt.

### Beispiel 6: Herstellung von Silica-beschichteten, Siliconharzverstärkten Siliconelastomer-Partikeln P

320 g der erfindungsgemäßen Mischung B aus dem Beispiel 5 und 240 g der wässrigen Kieselsäuredispersion A aus dem Beispiel 1 wurden gemäß Beispiel 2 emulgiert. Anschließend wurden gemäß Beispiel 4 pulverförmige Siliconelastomer-Partikel P mit einer mittleren Partikelgröße von d50 = 3,4 µm hergestellt.

### Beispiel 7: Polyadditionsfähige, Silica-verstärkte Mischung B

In einem handelsüblichen Laborkneter wurden 917 g eines vinyldimethylsiloxy-terminierten Polydimethylsiloxans mit einer Viskosität von 1000 mm²/s (25°C) vorgelegt, auf 150°C aufgeheizt und mit 621 g einer hydrophoben pyrogenen Kieselsäure mit einer spezifischen Oberfläche von 125 m2/g (gemessen nach BET) und einem Kohlenstoffgehalt von 1,6-2,0 Gew.-% versetzt. Es entstand eine hochviskose Masse, die anschließend mit 618 g des oben genannten Polydimethylsiloxans verdünnt wurde. Durch Kneten unter Vakuum (10 mbar) bei 150°C wurde die erhaltene Masse innerhalb einer Stunde von Wasser und überschüssigen Beladungsmittelresten, insbesondere flüchtigen Bestandteilen, befreit. Anschließend werden 123 g eines Mischpolymerisats aus Dimethylsiloxy-, Methylhydrogensiloxy- und Trimethylsiloxy-Einheiten mit einer Viskosität von 100 mm²/sbei 25°C und einem SiH-Gehalt von 0,47% zugegeben und homogen vermischt.

### Beispiel 8: Herstellung von Silica-beschichteten, Silicaverstärkten Siliconelastomer-Partikeln P

156 g der erfindungsgemäßen Mischung B aus dem Beispiel 7 und 149 g der wässrigen Kieselsäuredispersion A aus dem Beispiel 1 wurden gemäß Beispiel 3 emulgiert. Anschließend wurden gemäß Beispiel 4 pulverförmige Siliconelastomer-Partikel P mit einer mittleren Partikelgröße von d50 = 12 µm hergestellt.

### Vergleichsbeispiel V1: Polyadditionsfähige

Siliconelastomerzusammensetzung ohne verstärkenden Füllstoff 1535 g eines Vinylgruppen-haltigen Polydimethylsiloxans der Viskosität 1000 mm²/s (25 °C), bei dem beide Kettenenden mit einer Dimethylvinylsilyl-Gruppe geblockt sind, wurden mit einem Flügelrührer mit 123 g eines Mischpolymerisats aus Dimethylsiloxy-, Methylhydrogensiloxy- und Trimethylsiloxy-Einheiten mit einer Viskosität von 100 mm²/sbei 25°C und einem SiH-Gehalt von 0,47% ohne Zusatz eines verstärkenden Additivs homogen gemischt.

### Vergleichsbeispiel V2: Herstellung von Silica-beschichteten, Siliconelastomer-Partikeln ohne verstärkenden Füllstoff

320 g der nicht-erfindungsgemäßen Siliconelastomerzusammensetzung aus dem Vergleichsbeispiel V1 und 240 g der wässrigen Kieselsäuredispersion aus dem Beispiel 1 wurden gemäß Beispiel 2 emulgiert. Anschließend wurden gemäß Beispiel 4 pulverförmige Siliconelastomer-Partikel mit einer mittleren Partikelgröße von d50 = 18 µm hergestellt.

### Vergleichsbeispiel V3: Polyadditionsfähige

Siliconelastomerzusammensetzung ohne verstärkenden Füllstoff

479 g eines Vinylgruppen-haltigen Polydimethylsiloxans der Viskosität 200 mm²/s (25 °C), bei dem beide Kettenenden mit einer Dimethylvinylsilyl-Gruppe geblockt sind, wurden mit einem Flügelrührer mit 21 Gew.-% eines Trimethylsilyl-terminierten Methylhydrosiloxan-dimethylsiloxan-Copolymers mit 0,73 Gew.-% Si-gebundenen Wasserstoff der Viskosität 65 mm²/s (25 °C) ohne Zusatz eines verstärkenden Additivs homogen gemischt.

### Vergleichsbeispiel V4: Herstellung von Silica-beschichteten, Siliconelastomer-Partikeln ohne verstärkenden Füllstoff

320 g der nicht-erfindungsgemäßen Siliconelastomerzusammensetzung aus dem Vergleichsbeispiel V3 und 240 g der wässrigen Kieselsäuredispersion aus dem Beispiel 1 wurden gemäß Beispiel 2 emulgiert. Anschließend wurden gemäß Beispiel 4 pulverförmige Siliconelastomer-Partikel mit einer mittleren Partikelgröße von d50 = 9 µm hergestellt.

### Beispiel 9: Sensorische Bewertung der Partikel P

Die sensorische Bewertung der erfindungsgemäßen Silica-beschichteten Siliconelastomer-Partikel P aus den Beispielen 6 und 8, sowie der nicht-erfindungsgemäßen Partikeln aus den Vergleichsbeispielen V2 und V4 erfolgt durch ein geschultes Team von 5 Testern.

Für die Bewertung haben die Tester ihre Hände und Unterarme mit Seife und Wasser gewaschen. Auf dem Unterarm wurde für jede Probe eine kreisförmige Testfläche mit einem Durchmesser von 4 cm angezeichnet und jeweils 0,04 g der jeweiligen Partikel aufgetragen und verteilt.

Die Tester bewerteten dabei das Gefühl der Glattheit während des Verteilens und Hautgefühl nach dem Verteilen der Pulver auf einer Skala von 0 (schlecht) bis 4 (sehr gut). Die Ergebnisse sind in Tabelle 1 dargestellt.

**Tabelle 1**

| Beispiel | Glattheit | Hautgefühl |
|---|---|---|
| Beispiel 6 | 4 | 3 |
| Beispiel 8 | 3 | 4 |
| Vergleichsbeispiel V2* | 1 | 2 |
| Vergleichsbeispiel V4* | 1 | 2 |

| | | |
|---|---|---|
| *nicht erfindungsgemäß | | |

### Beispiel 10: Mechanische Beständigkeit der Partikel P

Im Unterschied zu Beispiel 9 haben die Tester die Partikel unter starken Druck auf der Haut verteilt. Die Ergebnisse der erfindungsgemäßen Silica-beschichteten Siliconelastomer-Partikel P aus den Beispielen 6 und 8 waren dabei unverändert, während die nicht-erfindungsgemäßen Partikeln aus den Vergleichsbeispielen V2 und V4 während des Verteilens Klümpchen bildeten, was in kosmetischen Anwendungen unerwünscht ist.

**Tabelle 2**

| Beispiel | Glattheit | Hautgefühl |
|---|---|---|
| Beispiel 6 | 4 | 3 |
| Beispiel 8 | 3 | 4 |
| Vergleichsbeispiel V2* | 0 | 0 |
| Vergleichsbeispiel V4* | 0 | 0 |

| | | |
|---|---|---|
| *nicht erfindungsgemäß | | |

### Beispiel 11: Bewertung der mechanischen Festigkeit

Die erfindungsgemäßen Silica-beschichteten Siliconelastomer-Partikel P aus den Beispielen 6 und 8, sowie die nicht-erfindungsgemäßen Partikeln aus den Vergleichsbeispielen V2 und V4 wurden jeweils unter Rühren mit 100 Gew.-% eines Polydimethylsiloxans der Viskosität 2 mm²/s (25 °C) versetzt. Dabei quellen die Partikel und absorbieren das Siliconöl vollständig.

Anschließend wurden die gequollenen Partikel analog Beispiel 9 auf der Haut getestet. Überaschenderweise zeigte sich, dass die erfindungsgemäßen Silica-beschichteten Siliconelastomer-Partikel aus den Beispielen 6 und 8 nach dem Verteilen ein sehr gutes samtig-seidige gleitendes Hautgefühl aufweisen, während das Hautgefühl der nicht-erfindungsgemäßen Partikel aus den Vergleichsbeispielen V2 und V4 nach dem Verteilen deutlich wachsiger und stockender war.

**Tabelle 3**

| Beispiel | Glattheit | Hautgefühl |
|---|---|---|
| Beispiel 6 | 4 | 4 |
| Beispiel 8 | 4 | 4 |
| Vergleichsbeispiel V2* | 3 | 0 |
| Vergleichsbeispiel V4* | 3 | 0 |

| | | |
|---|---|---|
| *nicht erfindungsgemäß | | |

## Patentansprüche

1. Partikel P, aufgebaut aus einem Kern K enthaltend vernetzte Siliconelastomerzusammensetzung X und einer Hülle H aus Silica S,
**dadurch gekennzeichnet, dass** der Kern K verstärkenden Füllstoff F enthält, welcher ausgewählt wird aus pyrogenen oder gefällten hydrophoben Kieselsäuren mit BET-Oberflächen von mindestens 50 m²/g gemäß DIN 66131 sowie Rußen und Aktivkohlen und Siliconharzen.

2. Partikel P nach Anspruch 1, bei denen die Siliconelastomerzusammensetzung X additionsvernetzend ist und
(A) mindestens eine lineare Verbindung, die Reste mit aliphatischen Kohlenstoff-Kohlenstoff-Mehrfachbindungen aufweist,
(B) mindestens eine lineare Organopolysiloxanverbindung mit Si-gebundenen Wasserstoffatomen,
oder anstelle von (A) und (B)
(C) mindestens eine lineare Organopolysiloxanverbindung, die SiC-gebundene Reste mit aliphatischen Kohlenstoff-Kohlenstoff Mehrfachbindungen und Si-gebundene Wasserstoffatome aufweist, und
(D) mindestens einen Hydrosilylierungskatalysator. enthält.

3. Partikel P nach einem der vorangehenden Ansprüche, bei denen der verstärkende Füllstoff F infolge einer Oberflächenbehandlung eine Methanolzahl wie in der Beschreibung angegeben gemessen größer 40 aufweist.

4. Partikel P nach einem der vorangehenden Ansprüche, bei denen die Kerne K pro 100 Gew.-Teile der vernetzbaren Siliconelastomerzusammensetzung X 5 bis 200 Gew.-Teile an verstärkendem Füllstoff F enthalten.

5. Partikel P nach einem der vorangehenden Ansprüche, bei denen die Silica S ausgewählt wird aus pyrogenen oder gefällten hydrophoben Kieselsäuren mit BET-Oberflächen von mindestens 50 m²/g.

6. Verfahren zur Herstellung von Partikeln P gemäß einem der vorangehenden Ansprüche, bei dem in einem ersten Schritt eine Dispersion A enthaltend Silica S und Wasser mit einer Mischung B enthaltend vernetzbare Siliconelastomerzusammensetzung X vermischt wird, wobei eine kontinuierliche Wasser enthaltende Phase und eine diskontinuierliche Phase enthaltend vernetzbare Siliconelastomerzusammensetzung X entstehen und in einem zweiten Schritt die diskontinuierliche Phase vernetzt wird, wobei die Partikel P entstehen,
**dadurch gekennzeichnet, dass** die Mischung B und die diskontinuierliche Phase verstärkenden Füllstoff F enthalten.

7. Verfahren nach Anspruch 6, bei dem die kontinuierliche Phase mindestens 80 Gew.-% Wasser enthält.

8. Verfahren nach Anspruch 6 oder 7, bei dem im ersten Schritt das Gesamtvolumen an Mischung B und der Dispersion A vorgelegt wird, wobei das vorgelegte Volumen so bemessen ist, dass es die Gesamtmenge an benötigter Silica S und Wasser enthält.

9. Verfahren nach Anspruch 6 bis 8, bei dem im ersten Schritt Katalysator zur Vernetzung der vernetzbaren Siliconelastomerzusammensetzung X zugesetzt wird.

## Claims

1. Particles P composed of a core K comprising crosslinked silicone elastomer composition X and of a shell H of silica S,
**characterized in that** the core K comprises reinforcing filler F which is selected from pyrogenic or precipitated hydrophobic silicas having DIN 66131 BET surface areas of at least 50 m²/g and also from carbon blacks and activated carbons and silicone resins.

2. Particles P according to Claim 1, wherein the silicone elastomer composition X is addition-crosslinking and comprises
(A) at least one linear compound which contains radicals with aliphatic carbon-carbon multiple bonds,
(B) at least one linear organopolysiloxane compound with Si-bonded hydrogen atoms,
or, instead of (A) and (B),
(C) at least one linear organopolysiloxane compound which contains SiC-bonded radicals with aliphatic carbon-carbon multiple bonds and Si-bonded hydrogen atoms, and
(D) at least one hydrosilylation catalyst.

3. Particles P according to either of the preceding claims, wherein the reinforcing filler F owing to surface treatment has a methanol number, measured as indicated in the description, of greater than 40.

4. Particles P according to any of the preceding claims, wherein the cores K comprise 5 to 200 parts by weight of reinforcing filler F per 100 parts by weight of the crosslinkable silicone elastomer composition X.

5. Particles P according to any of the preceding claims, wherein the silica S is selected from pyrogenic or precipitated hydrophobic silicas having BET surface areas of at least 50 m²/g.

6. Method for producing particles P according to any of the preceding claims, wherein, in a first step, a dispersion A comprising silica S and water is mixed with a mixture B comprising crosslinkable silicone elastomer composition X, to give a continuous phase containing water and a discontinuous phase containing crosslinkable silicone elastomer composition X,
and in a second step the discontinuous phase is crosslinked, to give the particles P,
**characterized in that** the mixture B and the discontinuous phase comprise reinforcing filler F.

7. Method according to Claim 6, wherein the continuous phase comprises at least 80 wt% of water.

8. Method according to Claim 6 or 7, wherein, in the first step, the total volume of mixture B and of the dispersion A is introduced initially, the initially introduced volume being made such that it comprises the total amount of required silica S and water.

9. Method according to Claim 6 to 8, wherein, in the first step, catalyst is added for crosslinking the crosslinkable silicone elastomer composition X.

## Revendications

1. Particules P, construites d'un noyau K contenant une composition réticulée d'élastomère de silicone X et d'une enveloppe H composée d'une silice S,
**caractérisées en ce que** le noyau K contient une charge renforçante F qui est choisie parmi des acides siliciques hydrophobes fumés ou précipités dotés de surfaces BET d'au moins 50 m²/g selon la norme DIN 66131 ainsi que des suies et des charbons actifs et des résines de silicone.

2. Particules P selon la revendication 1, dans lesquelles la composition d'élastomère de silicone X est réticulante par addition et contient
(A) au moins un composé linéaire qui présente des radicaux comportant des liaisons multiples carbone-carbone aliphatiques,
(B) au moins un composé de type organopolysiloxane linéaire comportant des atomes d'hydrogène liés à Si,
ou à la place de (A) et (B)
(C) au moins un composé de type organopolysiloxane linéaire qui présente des radicaux liés à SiC comportant des liaisons multiples carbone-carbone aliphatiques et des atomes d'hydrogène liés à Si, et
(D) au moins un catalyseur d'hydrosilylation.

3. Particules P selon l'une quelconque des revendications précédentes, dans lesquelles la charge renforçante F présente, à la suite d'un traitement de surface, un indice de méthanol supérieur à 40 mesuré comme indiqué dans la description.

4. Particules P selon l'une quelconque des revendications précédentes, dans lesquelles les noyaux K contiennent, par 100 parties en poids de la composition réticulable d'élastomère de silicone X, 5 à 200 parties en poids de charge renforçante F.

5. Particules P selon l'une quelconque des revendications précédentes, dans lesquelles la silice S est choisie parmi des acides siliciques hydrophobes fumés ou précipités dotés de surfaces BET d'au moins 50 m²/g.

6. Procédé de préparation de particules P selon l'une quelconque des revendications précédentes, dans lequel dans une première étape une dispersion A contenant une silice S et de l'eau est mélangée avec un mélange B contenant une composition réticulable d'élastomère de silicone X, une phase continue contenant de l'eau et une phase discontinue contenant une composition réticulable d'élastomère de silicone X étant produites et dans une deuxième étape, la phase discontinue est réticulée, les particules P étant produites, **caractérisé en ce que** le mélange B et la phase discontinue contiennent une charge renforçante F.

7. Procédé selon la revendication 6, dans lequel la phase continue contient au moins 80 % en poids d'eau.

8. Procédé selon la revendication 6 ou 7, dans lequel dans la première étape, le volume total de mélange B et de la dispersion A est fourni, le volume fourni étant mesuré de telle manière qu'il contienne la quantité totale de silice S et d'eau.

9. Procédé selon les revendications 6 à 8, dans lequel dans la première étape un catalyseur de réticulation de la composition réticulable d'élastomère de silicone X est ajouté.
